# EUROPEAN PATENT SPECIFICATION

(11) **EP 0 921 039 B1**
(45) Date of publication and mention of the grant of the patent: **06.11.2002**
(21) Application number: 98500262.5
(22) Date of filing: 03.12.1998
(51) Int. Cl.: B60R 13/02

(54) **Internal trim for doors**
Paneel für Türinnenverkleidung
Panneau de garnissage intérieur pour portes

(30) Priority: 03.12.1997 ES 9702510
(43) Date of publication of application: 09.06.1999
(73) Proprietor: GRUPO ANTOLIN-INGENIERIA, S.A., 09080 Burgos (ES)
(72) Inventor: Manso Moneo, Alberto, 09004 Burgos (ES)
(74) Representative: Urteaga Simarro, José Antonio

(56) References cited:
- DE-A- 4 433 426
- DE-A- 4 433 427
- GB-A- 2 141 472
- US-A- 5 224 299
- US-A- 5 456 513

## Description

This invention relates to a door trim for automobile vehicles and similar which are units used to cover the internal parts of doors and, at the same time, have different items, such as winding handles, pull handles, loudspeakers, etc., incorporated into them. An internal trim according to the preamble of claim 1 is known from DE-A-4 433 426.

In door trims of this kind, it is normal and frequent for them to have more or less capricious shapes in order to perform their function and, moreover, it is necessary to make two different types of panels, some for the right side of the vehicle and the others for the left side.

This way of proceeding creates a considerable number of tools and tooling in order to suitably attend both sides of the vehicle, all of which generates costs of a certain relative consideration, which also extend in the same way to the systems for fixing the said door trim to the sheet steel of the door, such as clips, bolts, screws, etc.

One object of the invention is to provide a door trim that allows fixing on either the left side or right side door of the vehicle, without differentiation.

Another object of the invention is a door trim that allows the incorporation of the maximum possible number of accessories or components that are normally placed in trims of this kind.

Another object of the invention is a door trim that achieves an important reduction in the tooling for manufacturing panels, with a considerable reduction of costs and a standardising of parts.

Finally, another object of the invention is a door trim that also has a positive effect on the systems used for fixing the trim to the sheet steel of the door.

In order to achieve these objectives, the invention claims a door trim whose base or casing has a symmetrical shape, so that thanks to this symmetry, it is possible to fit the trim into either the right side or left side of the vehicle door indifferently.

This symmetry makes it possible to reach both the XX' and the YY' axes, as the shapes of the trim are geometrical, e.g. oval, rectangular, square, elliptical, etc., so that this shape is defined in such a way that it allows the incorporation of the maximum possible number of accessories or components to be located in the trims.

Obviously, with this symmetry, a noticeable reduction is achieved in the tooling required to manufacture the panels, as the same tooling can be used for both the right side and the left side, while also allowing an important reduction in costs, as well as the standardisation of parts.

The incorporation of accessories, such as window winding handles, door pockets, brightwork, etc., and other possible accessories that can be integrated into a panel, will determine, with their location, whether the door trim is to be fitted to the right side or to the left side door of the vehicle.

Evidently, the symmetry of the door trim also affects the system by which it is fixed to the sheet steel of the door, with the layout of the said fixing items therefore being totally symmetrical.

The accompanying sheet of drawings shows a series of practical solutions for the invention, which, in a non-restrictive way, represent the following:
- Figure 1 is a plan view of an elliptically shaped trim, in accordance with the invention.
- Figure 2 is a plan view of a rectangular-shaped trim, in accordance with the invention.
- Figure 3 is a plan view of the above with items incorporated into it.
- Figure 4 is a view of Figure 1 with one of the winding handles incorporated.
- Figure 5 is a representation of a trim, in accordance with the invention, with some of the accessories to be incorporated into it.

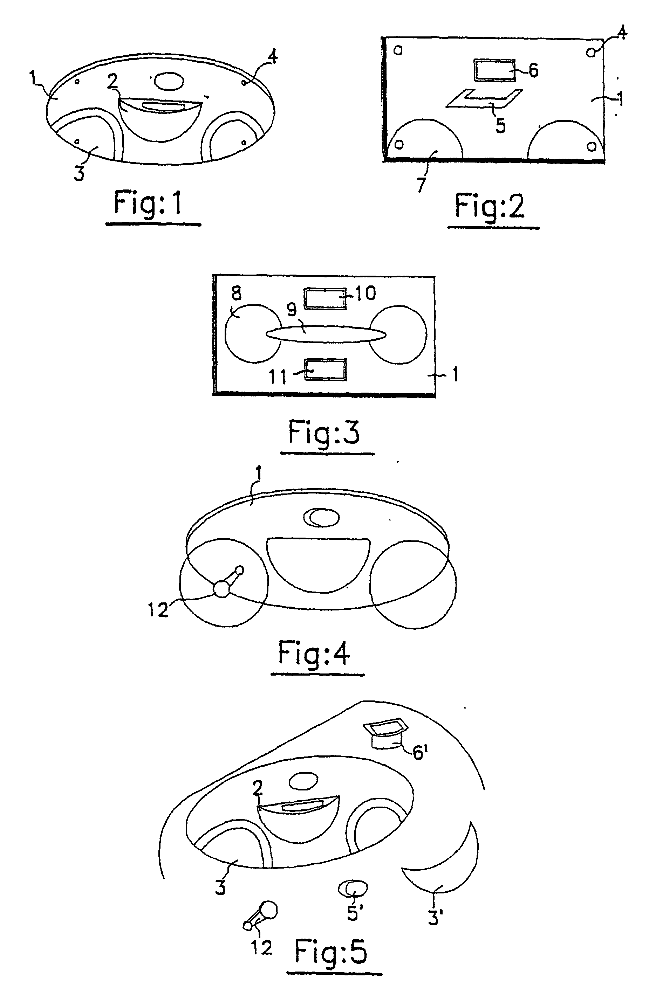

Looking now at Figure 1, we can observe an oval-shaped door trim, in which the fixing points (4) can be appreciated, symmetrically arranged in relation to the XX' and the YY' axes. In this case, the areas (3) indicate the position where the window winding handle would be located, depending on whether it is the right hand or left hand door.

In accordance with Figures 2 and 3, the plan shape of the trim in this particular case is rectangular, with the fixing points (4) also placed symmetrically on the panel (1), the accessory items, such as brightwork on handles (5), locations for several pull handles (6,10,11), other auxiliary items (9), as well as the areas (7,8) for placing the window winding handles.

According to Figure 4, the door trim (1) already has the window winding handle (12) incorporated into it, situated in this case for application in the right side of the door and with the possibility of incorporating the window winding handle for the left side on the other side of the trim.

In accordance with Figure 5, we can observe the door trim with the possibility of the incorporation or integration of different accessories, such as storage pockets (3'), brightwork for internal door handles (5'), door pull handles (6'), etc. as well as grilles, loudspeakers and other items, which, by their position in the panel, will define whether the trim is for right hand or left hand use.

## Claims

1. Internal trim for doors, consisting of a base or casing (1) into which various accessories or components (5, 6, 9, 10, 11) are incorporated or integrated, that adapts to and is secured to the interior of vehicle doors, which is **characterised in that** the said base or casing (1) is one single part and has a symmetrical external shape in relation to its two horizontal and vertical axes, **in that** the different fixing items (4) used for securing the trim to the door are also arranged symmetrically in the base or casing (1), in such a way that it allows assembly of the said trim without differentiation in the right side or in the left side of the vehicle door, by adapting the components (5, 6, 9, 10, 11) to the corresponding positions for each side.

2. Internal trim for doors, in accordance with claim 1, **characterised in that** the base or casing (1) has a regular geometric shape.

3. Internal trim for doors in accordance with claim 1, **characterised in that** the base or casing (1) has an irregular geometric shape.

4. Internal trim for doors, in accordance with claim 1, **characterised in that** the location of the accessories in the base or casing will define which side, right or left, the door trim is to be fitted to.

## Patentansprüche

1. Innerer Träger für Türen bestehend aus einer Basis oder Gehäuse (1), in welches verschiedene Zubehörteile oder Komponenten eingefügt oder integeriert werden, das sich an die Innenseite der Türen von Fahrzeugen anpasst und dort befestigt wird, **dadurch gekennzeichnet, dass** die besagte Basis oder das besagte Gehäuse (1) ein Einzelteil mit einer symetrischen Aussenform bezüglich seiner beiden waagerechten und senkrechten Achsen ist, dass die verschiedenen Befestigungspunkte (4) für die Befestigung des Trägers an der Tür ebenfalls symetrisch an der Basis oder dem Gehäuse (1) angeordnet sind, so dass das besagte Trägerteil ohne Unterschied sowohl an rechten als auch an linken Fahrzeugtüren befestigt werden kann, indem die Komponenten (5, 6, 9, 10, 11) an die entsprechenden Stellungen für jede Seite angepasst werden.

2. Innerer Träger für Türen nach Anspruch 1, **dadurch gekennzeichnet, dass** die Basis oder das Gehäuse (1) eine regelmässige geometrische Form hat.

3. Innerer Träger für Türen nach Anspruch 1, **dadurch gekennzeichnet, dass** die Basis oder das Gehäuse (1) eine unregelmässige geometrische Form hat.

4. Innerer Träger für Türen nach Anspruch 1, **dadurch gekennzeichnet, dass** die Lage der Zubehörteile in der Basis oder dem Gehäuse definiert, auf welcher Seite, rechts oder links, der Träger für Türen angebracht werden soll.

## Revendications

1. L'habillage intérieur des portes consiste en un support ou boîtier (1) qui comprend plusieurs accessoires ou pièces. Il s'adapte et tient bien à l'intérieur des portes du véhicule non seulement car ce support ou boîtier (1) est une pièce unique, dotée d'une forme externe symétrique par rapport à ses deux axes horizontal et vertical, mais également parce que les diverses pièces de montage (4) utilisées pour bien fixer l'habillage à la porte sont elles aussi montées symétriquement par rapport au support ou boîtier (1). Ainsi, le montage de cet habillage s'effectue indistinctement, à droite ou à gauche de la porte du véhicule, en adaptant les pièces aux positions correspondantes pour chaque côté.

2. L'habillage intérieur des portes, conformément à la revendication 1, est **caractérisé par le fait que** le support ou boîtier (1) présente une forme géométrique régulière.

3. L'habillage intérieur des portes, conformément à la revendication 1, est **caractérisé par le fait que** le support ou boîtier (1) présente une forme géométrique irrégulière.

4. L'habillage intérieur des portes, conformément à la revendication 1, est **caractérisé par le fait que** l'emplacement des accessoires sur le support ou boîtier définira le côté, droit ou gauche, où il faudra monter l'habillage de la porte.
